# FASCICULE DE BREVET EUROPEEN

(11) **EP 1 431 596 B1**
(45) Date de publication et mention de la délivrance du brevet: **30.11.2005**
(21) Numéro de dépôt: 03293022.4
(22) Date de dépôt: 03.12.2003
(51) Int. Cl.: F16C 11/06

(54) **Liaison autobloquante entre une tige à rotule et une partie plane**
Selbstverriegelnde Verbindung zwischen einer Kugelkopf Stange und einem flachen Teil
Self locking joint between a ball head rod and a flat part

(30) Priorité: 18.12.2002 FR 0216101
(43) Date de publication de la demande: 23.06.2004
(73) Titulaire: Peugeot Citroen Automobiles S.A., 78140 Vélizy Villacoublay (FR)
(72) Inventeur: Angebaud, Pascal, 95870 Bezons (FR)
(74) Mandataire: Gendraud, Pierre

(56) Documents cités:
- EP-A- 0 806 577
- EP-A- 0 896 162
- GB-A- 2 351 531
- US-A- 4 650 363
- US-A- 5 011 322
- US-A- 5 163 773
- US-A- 5 713 689

## Description

La présente invention concerne une liaison autobloquante entre une tige à rotule et une partie plane.

Plus particulièrement l'invention concerne une liaison de ce type entre une tige dont une extrémité comprend une rotule et une partie plane comprenant un verrou et un poussoir fixé solidairement à la partie plane et comprenant une cavité hémisphérique adaptée pour loger la rotule de la tige, dans laquelle le verrou est adapté pour maintenir en contact la rotule et le poussoir.

Elle a plus particulièrement pour application la liaison entre la tige d'amplificateur de freinage à la pédale de frein d'un véhicule automobile.

Cette liaison doit répondre aux fonctions suivantes :
- transmettre un effort et un mouvement simultanément entre la pédale de frein et la tige de commande de l'amplificateur de freinage dans les deux sens ;
- répondre aux normes de sécurité;
- s'adapter respectivement aux dimensions et à la forme de la pédale de frein et à la tige de commande de celle-ci ;
- s'adapter dans l'environnement de l'habitacle du véhicule ;
- résister aux conditions de température et d'humidité de l'habitacle ;
- résister à l'effort d'arrachement subi lors de l'actionnement de la pédale ;
- limiter au mieux les jeux fonctionnels entre la pédale et la tige de commande ;
- résister à l'effort exercé par la pédale et à l'amplificateur de freinage ;
- ne pas blesser le conducteur ;
- résister aux manipulations du montage;
- assurer une sécurité de montage corect de la liaison ;
- ne transmettre aucun son audible à l'oreille de l'homme lors de l'actionnement de la pédale de frein ;
- faciliter le montage et le démontage de la tige de commande et de la pédale ;
- permettre à l'homme d'accéder physiquement et visuellement à la liaison dans l'evironnement du véhicule.

En outre, cette liaison, telle qu'elle est actuellement réalisée, pose un certain nombre de problèmes.

En effet, tout d'abord la zone d'accès à l'intérieur du véhicule automobile est telle qu'elle implique un montage difficile à réaliser pour les monteurs sur la ligne d'assemblage du véhicule.

Ensuite, la sécurité du montage n'est pas toujours assurée, en particulier en fonction des pièces utilisées qui servent à réaliser la liaison.

Enfin, les liaisons existantes entrainent un bruit gênant lorsque le conducteur appuie sur la pédale de frein.

Le brevet JP 10-73123 divulgue une liaison entre une pédale d'embrayage et un émetteur hydraulique associé qui répond en partie aux inconvénients précités mais qui est très complexe de par le nombre de pièces utilisées. Cette solution est donc très coûteuse.

En outre, cette liaison n'est pas fiable en termes de sécurité. En effet, si cette liaison est abîmée, par exemple en cas de démontage puis remontage, la sécurité peut en être affectée.

Dans ce cas, il est nécessaire de détruire la liaison au démontage et en installer une nouvelle.

L'encombrement global de cette liaison est important et nécessite un aménagement conséquent du pédalier pour son installation sur véhicule

Une telle liaison, selon le préambule de la revendication 1, est aussi connue du document US 4 650 363.

Le but de l'invention est alors de pallier aux inconvénients précités et, plus généralement, de proposer une liaison autobloquante du type précité qui réponde aux difficultés des liaisons existantes.

Pour ce faire, l'invention a pour objet une liaison autobloquante entre une tige dont une extrémité comprend une rotule et une partie plane comprenant un verrou et un poussoir fixé solidairement à la partie plane et comprenant une cavité hémisphérique adaptée pour loger la rotule de la tige, dans laquelle le verrou est adapté pour maintenir en contact la rotule et le poussoir caractérisée en ce que le verrou est constitué d'une seule pièce de forme générale cylindrique comprenant, à l'une de ses extrémités, une zone adaptée pour bloquer le poussoir à l'intérieur de la pièce et, à l'autre de ses extrémités, une pluralité de pattes flexibles dont la partie intérieure est recourbée vers l'intérieur de la pièce en formant un cercle de diamètre inférieur à celui de la rotule et adaptées pour s'écarter lors de l'introduction de la rotule à l'intérieur de la pièce et se rabattre après introduction de celle-ci.

Avantageusement et selon l'invention, le poussoir comprend deux branches disposées sous la cavité hémisphérique dont l'écartement est sensiblement égal à l'épaisseur de la partie plane et dont l'extrémité est percé d'un trou adapté pour recevoir chacun un ergot disposé chacun sur une face de la partie plane.

Avantageusement encore, la partie inférieure de la cavité présente un épaulement dont la profondeur est suffisante pour y accrocher les crochets du verrou.

Selon une variante préférée de l'invention, la pièce est ajourée de manière à visualiser l'introduction correcte de la rotule dans la pièce.

Selon un premier mode de réalisation de l'invention, la zone est constituée d'une pluralité de crochets flexibles dont la partie intérieure est recourbée vers l'intérieur de la pièce.

Selon un deuxième mode de réalisation préféré de l'invention, la zone est constituée d'un épaulement continu dont le diamètre est inférieur à celui extérieur du poussoir.

L'invention concerne également un premier procédé de réalisation de la liaison autobloquante selon le premier mode de réalisation de l'invention, selon lequel on réalise les étapes suivantes :
a/introduction de la rotule dans la pièce du côté des pattes flexibles ;
b/dégagement de la pièce de la rotule en repoussant la pièce vers l'autre extrémité de la tige ;
c/poussée de la pièce vers le poussoir jusqu'au rabat des crochets flexibles autour du poussoir.

L'invention concerne également un deuxième procédé de réalisation de la liaison autobloquante selon le deuxième mode de réalisation préféré de l'invention, selon lequel on réalise les étapes suivantes :
a/introduction du poussoir dans la pièce ;
b/fixation de l'ensemble poussoir et pièce à la partie plane ;
c/introduction de la rotule dans la pièce jusqu'au contact avec la partie hémisphérique du poussoir.

L'invention concerne également l'utilisation de la liaison autobloquante pour lier la tige d'amplificateur de freinage à la pédale de frein d'un véhicule automobile dans laquelle la tige à rotule est constituée par la tige d'amplificateur et la partie plane est constituée par l'âme de la pédale de frein.

L'invention concerne enfin un véhicule automobile équipé d'au moins une liaison autobloquante décrite précédemment .

D'autres avantages et caractéristiques seront mieux compris à la lecture de la description détaillée d'une exemple de réalisation de l'invention faite en référence aux figures suivantes dans lesquelles :
- figure 1a, 1b et 1c : une vue respectivement en coupe transversale, en perspective éclatée avant montage, après montage d'un premier mode de réalisation de la liaison selon l'invention ;
- figure 2a, 2b et 2c : une vue respectivement en coupe transversale, en perspective éclatée avant montage, après montage d'un deuxième mode de réalisation préféré de la liaison selon l'invention.

La liaison autobloquante 1 comprend, dans ses deux modes de réalisation, une tige d'amplificateur de freinage 2 dont l'extrémité libre se termine par une rotule 21, un poussoir 3 qui vient se fixer à l'âme d'une pédale de frein et un verrou 4 assurant la liaison entre la tige 2 et le poussoir 3.

Plus exactement, le poussoir 3 commun aux deux modes de réalisation comprend à l'une de ses extrémités une cavité hémisphérique 31 de forme complémentaire à celle de la rotule 21 et à l'autre de ses extrémités deux branches identiques 32a, 32b qui s'étendent derrière la cavité 31 et qui sont percées chacune d'un trou 33a,33b.

La forme et la dimension de ces trous 33a, 33b permettent de loger deux ergots identiques non représentés disposés de part et d'autre de l'âme de la pédale de frein.

Le verrou 4, quant à lui, comprend tout d'abord un corps cylindrique 41 à partir duquel s'étendent, d'une part une zone 42 adaptée pour bloquer le poussoir 3 à l'intérieur et, d'autre part des pattes flexibles 43 recourbées vers l'intérieur du corps telles que leur extrémité 431 définit un cercle dont le diamètre D est inférieur à celui D' de la rotule 21 lorsque lesdites pattes ne sont pas sollicitées.

Dans les deux modes de réalisation, le verrou 4 est réalisé en matière plastique moulée en une seule pièce.

Dans le premier mode de réalisation de l'invention, la zone est constituée d'une pluralité de crochets flexibles 42 dont la partie intérieure 421 est de forme complémentaire de celle extérieure 311 de la cavité 31.

Dans le deuxième mode de réalisation, la zone 42 est constituée d'un épaulement continu 422 également de forme complémentaire de celle de la cavité extérieure 311 de la cavité 31.

Dans ce deuxième mode de réalisation également, le verrou 4 est également muni à sa périphérie d'une pluralité de lumières 44 qui permettent de visualiser le montage correct de la liaison comme il sera décrit ci-après.

Le montage de la liaison autobloquante selon les deux modes de réalisation s'effectue sur la ligne d'assemblage du véhicule c'est à dire lorsque le pédalier et l'amplificateur de freinage sont déjà montés sur le tablier du véhicule et que l'amplificateur de freinage l'est également respectivement dans l'habitacle et à l'intérieur du capot moteur.

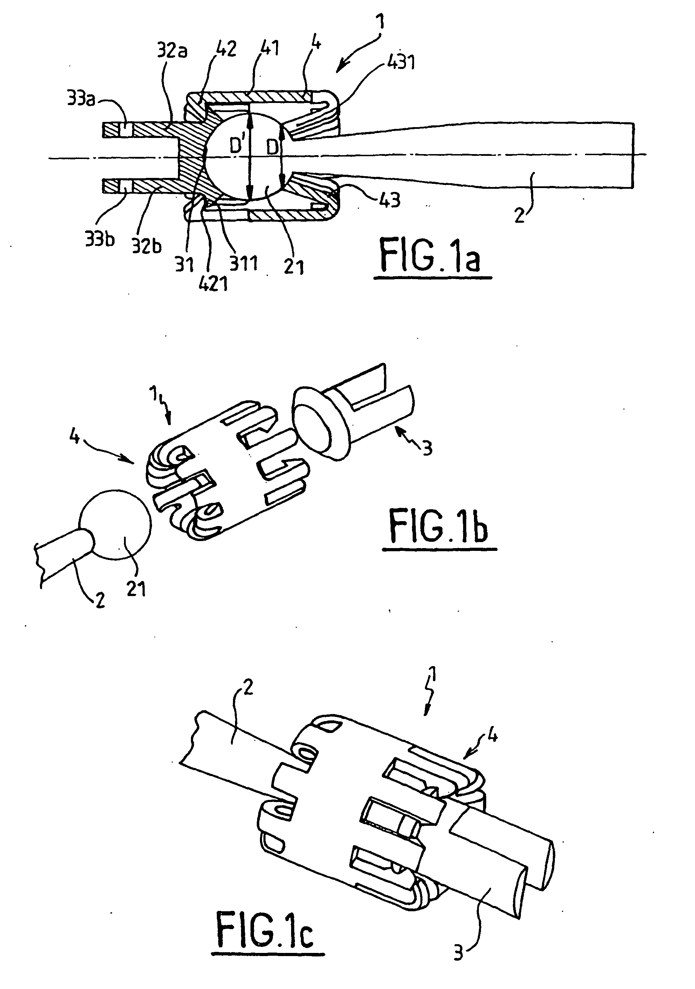

Dans le premier mode de réalisation de l'invention, c'est à dire selon les figures 1a à 1c, le montage s'effectue de la manière suivante.

L'opérateur fixe le poussoir 3 à l'âme pédale non représentée ici par l'intermédiaire en écartant les deux branches 32a,32b et en faisant pénétrer les trous 33 dans les ergots non représentés mais disposés de part et d'autre de l'âme pédale dont l'épaisseur est sensiblement égale à l'écartement entre les deux branches 32. Il est préférablede réaliser cette opération avant que l'amplificateur de freinage soit monté dans le capot moteur du véhicule automobile.

Une fois le poussoir 3 fixé, il approche la tige d'amplificateur de freinage de l'âme pédale et fait pénétrer la rotule 21 dans le corps cylindique 41.

Les pattes flexibles 43 s'écartent de leur position au repos jusqu'à atteindre un écartement tel que leur extrémité atteigne un diamètre D sensiblement égal à celui D' du diamètre de la rotule 21.

Une fois que la rotule 21 a franchie les pattes flexibles 43, celles-ci reviennent à leur position de repos et l'opérateur peut alors faire coulisser le verrou 4 jusqu'à dégager la rotule 21.

L'opérateur maintient alors le poussoir 3 sensiblement dans l'axe de la tige d'amplificateur 2 et amène la rotule 21 jusqu'à la loger dans la cavité hémisphérique 31.

Il fait alors coulisser le verrou 4 le long de la tige 2 jusqu'à ce que les crochets flexibles 42 viennent prendre appui contre le rebord extérieur 311 du poussoir 3.

La liaison autobloquante est alors achevée.

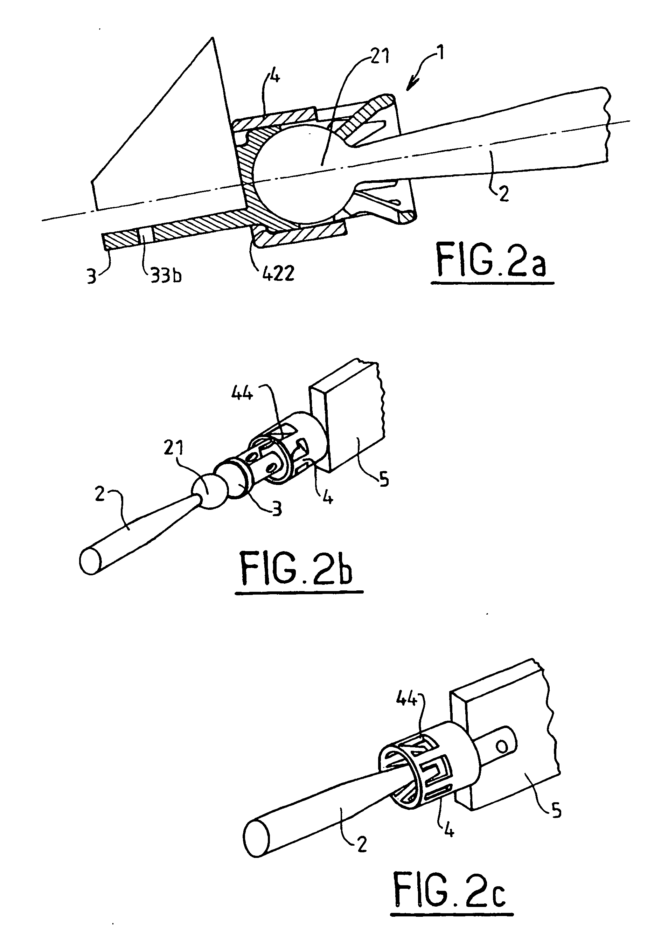

Dans le deuxième mode de réalisation préféré de l'invention, c'est à dire selon les figures 2a à 2c, le montage de la liaison s'effectue de la manière suivante.

L'opérateur glisse tout d'abord le poussoir 3 dans le verrou 4 de sorte que le rebord extérieur 311 vienne en appui contre l'épaulement intérieur 422 du verrou 4, et vient monter cet ensemble directement sur la pédale de frein, c'est à dire en fixant le poussoir 3 comme précédemment.

L'opérateur positionne alors la tige 2 directement dans l'axe du poussoir 3 et il ne lui reste plus qu'à appuyer sur la pédale de frein jusqu'à ce que la rotule 21 ait franchie les pattes flexibles 43.

La sécurité de la liaison est alors assurée. Dans les cas où les pattes flexibles 43 n'ont pas franchies la rotule 21 et où les crochets flexibles 42 n'ont pas franchi le rebord extérieur 311, le verrouillage de la liaison n'est pas assuré et l'ensemble verrouillé tombe.

L'avantage de cette liaison par rapport à celle décrite dans le premier mode est que l'opérateur n'a pas à utiliser ces mains pour effectuer le verouillage, ce qui est un gain en termes de sécurité. Il va de soi que différentes améliorations peuvent être apportées, à savoir proposer une liaison autobloquante du type précité qui réponde au cahier des charges très strict du montage d'une pédale de frein avec la tige d'amplificateur de frein. Par exemple, il est possible de prévoir tout autre type de fixation du poussoir sur l'âme pédale, tel que par vissage...

Il faut noter également le peu de pièces supplémentaires que l'invention rend nécessaire à installer sur le véhicule. Bien évidemment, bien que la liaison selon l'invention ait été décrite en référence à la liaison entre une pédale de frein et la tige d'amplificateur de freinage d'un véhicule automobile, celle-ci s'applique à tout type de liaison entre une tige avec une extrémité à rotule et une partie plane.

## Revendications

1. Liaison autobloquante (1) entre une tige (2) dont une extrémité comprend une rotule (21) et une partie plane comprenant un verrou (4) et un poussoir (3) fixé solidairement à la partie plane et comprenant une cavité hémisphérique (31) adaptée pour loger la rotule de la tige, dans laquelle le verrou est adapté pour maintenir en contact la rotule et le poussoir **caractérisée en ce** le verrou est constitué d'une seule pièce (41) de forme générale cylindrique comprenant, à l'une de ses extrémités, une zone (42) adaptée pour bloquer le poussoir à l'intérieur de la pièce et, à l'autre de ses extrémités, une pluralité de pattes flexibles (43) dont la partie intérieure est recourbée vers l'intérieur de la pièce en formant un cercle de diamètre (D) inférieur à celui (D') de la rotule et adaptés pour s'écarter lors de l'introduction de la rotule à l'intérieur de la pièce et se rabattre après introduction de celle-ci.

2. Liaison autobloquante selon l'une quelconque des revendications précédentes, **caractérisée en ce que** le poussoir (3) comprend deux branches (32a,32b) disposées sous la cavité hémisphérique (31) dont l'écartement est sensiblement égal à l'épaisseur de la partie plane et dont l'extrémité est percé d'un trou (33) adapté pour recevoir chacun un ergot disposé sur une face de la partie plane.

3. Liaison autobloquante selon l'une quelconque des revendications précédentes, **caractérisée en ce que** la partie inférieure de la cavité présente un épaulement (421) dont la profondeur est suffisante pour y accrocher la zone (43) du verrou.

4. Liaison autobloquante selon l'une quelconque des revendications 1 à 3, **caractérisée en ce que** la pièce est ajourée de manière à visualiser l'introduction correcte de la rotule dans la pièce.

5. Liaison autobloquante selon l'une quelconque des revendications 1 à 4, **caractérisée en ce que** la zone (42) est constituée d'une pluralité de crochets flexibles (421) dont la partie intérieure est recourbée vers l'intérieur de la pièce.

6. Liaison autobloquante selon l'une quelconque des revendications 1 à 4, **caractérisée en ce que** la zone (42) est constituée d'un épaulement continu (422) dont le diamètre est inférieur à celui extérieur du poussoir.

7. Procédé de réalisation de la liaison autobloquante selon l'une quelconque des revendications 1 à 5, **caractérisé en ce qu'**on réalise les étapes suivantes :
a/introduction de la rotule (21) dans la pièce (41) du côté des pattes flexibles (43);
b/dégagement de la pièce de la rotule (21) en repoussant la pièce (41) vers l'autre extrémité de la tige ;
c/poussée de la pièce (41) vers le poussoir (3) jusqu'au rabat des crochets flexibles (42) autour du poussoir.

8. Procédé de réalisation de la liaison autobloquante selon l'une quelconque des revendications 1 à 5, **caractérisé en ce que** qu'on réalise les étapes suivantes :
a/ introduction du poussoir (3) dans la pièce (42) ;
b/fixation de l'ensemble poussoir (3) et pièce (42) à la partie plane ;
c/introduction de la rotule (21) dans la pièce (42) jusqu'au contact avec la partie hémisphérique (31) au poussoir.

9. Utilisation de la liaison autobloquante selon l'une quelconque des revendications 1 à 6 pour lier la tige d'amplificateur de freinage à la pédale de frein d'un véhicule automobile dans laquelle la tige à rotule est constituée par la tige d'amplificateur et la partie plane est constituée par l'âme de la pédale de frein.

10. Véhicule automobile équipé d'au moins une liaison autobloquante selon l'une des revendications 1 à 6.

## Patentansprüche

1. Selbstverriegelnde Verbindung (1) zwischen einer Stange (2), die an einem Ende einen Kugelkopf (21) aufweist, und einem flachen Abschnitt, mit einem Riegel (4) und einem Schieber (3), der fest mit dem flachen Abschnitt verbunden ist und eine halbkugelförmige Aushöhlung (31) aufweist, die den Kugelkopf der Stange aufnehmen kann, wobei der Riegel den Kugelkopf und den Schieber miteinander in Kontakt halten kann, **dadurch gekennzeichnet, dass** der Riegel aus einem Stück (41) und im Wesentlichen zylinderförmig ist und an einem seiner Enden einen Bereich (42) aufweist, der den Schieber im Innern des Teils blockieren kann, und an seinem anderen Ende mehrere flexible Lappen (43), deren innerer Abschnitt zum Inneren des Teils umgebogen sind und dabei einen Kreis bildet, dessen Durchmesser (D) kleiner ist als der Durchmesser (D') des Kugelkopfes, und die sich beim Einführen des Kugelkopfes ins Innere des Teils auseinander spreizen und nach dem Einführen zurückklappen können.

2. Selbstverriegelnde Verbindung nach einem der vorhergehenden Ansprüche, **dadurch gekennzeichnet, dass** der Schieber (3) zwei Zweige (32a, 32b) aufweist, die unter der halbkugelförmigen Aushöhlung (31) mit einem Abstand angeordnet sind, der im Wesentlichen der Dicke des flachen Abschnitts entspricht, und deren Ende mit einem Loch (33) versehen ist, das jeweils einen an einer Seite des flachen Abschnitts angeordneten Nocken aufnehmen kann.

3. Selbstverriegelnde Verbindung nach einem der vorhergehenden Ansprüche, **dadurch gekennzeichnet, dass** der untere Abschnitt der Aushöhlung eine Schulter (421) aufweist, die tief genug ist, dass sich der Bereich (43) des Riegels dort einhaken kann.

4. Selbstverrigelnde Verbindung nach einem der Ansprüche 1 bis 3, **dadurch gekennzeichnet, dass** das Teil mit Löchern versehen ist, sodass die korrekte Einführung des Kugelkopfes in das Teil sichtbar ist.

5. Selbstverriegelnde Verbindung nach einem der Ansprüche 1 bis 4, **dadurch gekennzeichnet, dass** der Bereich (42) aus mehreren flexiblen Haken (421) besteht, deren innerer Abschnitt zum Innern des Teils umgebogen ist.

6. Selbstverriegelnde Verbindung nach einem der Ansprüche 1 bis 4, **dadurch gekennzeichnet, dass** der Bereich (42) aus einer durchgehenden Schulter (422) besteht, deren Durchmesser kleiner ist als der Außendurchmesser des Schiebers.

7. Verfahren zur Herstellung der selbstverriegelnden Verbindung nach einem der Ansprüche 1 bis 5, **dadurch gekennzeichnet, dass** die folgenden Schritte ausgeführt werden:
a) Einführen des Kugelkopfes (21) in das Teil (41) auf der Seite der flexiblen Lappen (43);
b) Lösen des Teils vom Kugelkopf (21), indem es zum anderen Ende der Stange geschoben wird;
c) Schieben des Teils (41) zum Schieber (3), bis sich die flexiblen Haken (42) um den Schieber legen.

8. Verfahren zur Herstellung der selbstverriegelnden Verbindung nach einem der Ansprüche 1 bis 5, **dadurch gekennzeichnet, dass** die folgenden Schritte ausgeführt werden:
a) Einführen des Schiebers (3) in das Teil (42);
b) Befestigen der Einheit aus Schieber (3) und Teil (42) am flachen Abschnitt;
c) Einführen des Kugelkopfes (21) in das Teil (42) bis zum Kontakt mit dem halbkugelförmigen Abschnitt (31) des Schiebers.

9. Verwendung der selbstverriegelnden Verbindung nach einem der Ansprüche 1 bis 6 zum Verbinden der Bremsverstärkerstange mit dem Bremspedal eines Kraftfahrzeugs, bei der die Stange mit Kugelkopf die Bremsverstärkerstange und der flache Abschnitt das Innere des Bremspedals ist.

10. Kraftfahrzeug, das mit mindestens einer selbstverriegelnden Verbindung nach einem der Ansprüche 1 bis 6 versehen ist.

## Claims

1. Self-locking connection (1) between a rod (2), one end of which comprises a ball joint (21) and a plane portion comprising a bolt (4) and a push rod (3) fixed integrally to the plane portion and comprising a hemispherical cavity (31) adapted to house the ball joint of the rod, in which the bolt is adapted to keep the ball joint and the push rod in contact **characterised in that** the bolt is constituted by a single part (41) of general cylindrical shape comprising, at one of its ends, a zone (42) adapted to lock the push rod inside the part and, at its other end, a plurality of flexible feet (43), the inner portion of which is curved towards the inside of the part, forming a circle with a diameter (D) less than that (D') of the ball joint and adapted to move aside when the ball joint is introduced inside the part and for moving back after said ball joint is introduced.

2. Self-locking connection according to any one of the preceding claims, **characterised in that** the push rod (3) comprises two branches (32a, 32b) arranged below the hemispherical cavity (31), the spacing of which is substantially equal to the thickness of the plane portion and the end of which has a hole (33) going through it, each adapted to receive a lug arranged on one face of the plane portion.

3. Self-locking connection according to any one of the preceding claims, **characterised in that** the lower part of the cavity has a shoulder (421), the depth of which is sufficient to latch the zone (43) of the bolt thereon.

4. Self-locking connection according to any one of Claims 1 to 3, **characterised in that** the part has cut-outs so as to show that the ball joint is correctly introduced into the part.

5. Self-locking connection according to any one of Claims 1 to 4, **characterised in that** the zone (42) is constituted by a plurality of flexible hooks (421), the inner portion of which is curved towards the inside of the part.

6. Self-locking connection according to any one of Claims 1 to 4, **characterised in that** the zone (42) is constituted by a continuous shoulder (422), the diameter of which is less than the external diameter of the push rod.

7. Method for producing the self-locking connection according to any one of Claims 1 to 5, **characterised in that** the following steps are carried out:
a/ introduction of the ball joint (21) into the part (41) on the side of the flexible feet (43);
b/ release of the part from the ball joint (21) by pushing the part (41) back towards the other end of the rod;
c/ pushing of the part (41) towards the push rod (3) until the flexible hooks (42) move back around the push rod.

8. Method for producing the self-locking connection according to any one of Claims 1 to 5, **characterised in that that** the following steps are carried out:
a/ introduction of the push rod (3) into the part (42);
b/ fixing of the push rod (3) / part (42) unit to the plane portion;
c/ introduction of the ball joint (21) into the part (42) until it makes contact with the hemispherical portion (31) of the push rod.

9. Use of the self-locking connection according to any one of Claims 1 to 6 in order to link the braking amplifier rod to the brake pedal of a motor vehicle in which the ball joint rod is constituted by the amplifier rod and the plane portion is constituted by the core of the brake pedal.

10. Motor vehicle equipped with at least one self-locking connection according to one of Claims 1 to 6.
